(19) Europäisches Patentamt
European Patent Office
Office européen des brevets

(11) **EP 2 141 853 A2**

(12) **EUROPEAN PATENT APPLICATION**

(43) Date of publication:
**06.01.2010 Bulletin 2010/01**

(51) Int Cl.:
***H04L 5/00*** *(2006.01)*

(21) Application number: **09164457.5**

(22) Date of filing: **02.07.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br><br>(30) Priority: **04.07.2008 JP 2008175509**<br><br>(71) Applicant: **Fujitsu Limited**<br>**Kawasaki-shi, Kanagawa 211-8588 (JP)** | (72) Inventor: **Ito, Akira**<br>**Kawasaki-shi Kanagawa 211-8588 (JP)**<br><br>(74) Representative: **Sunderland, James Harry**<br>**Haseltine Lake LLP**<br>**Lincoln House**<br>**300 High Holborn**<br>**London**<br>**WC1V 7JH (GB)** |

(54) **CQI signalling and resource, moduation and coding allocation**

(57) A radio communication apparatus includes a generation unit that generates first and second reception quality information, a transmission unit that transmits the first and second reception quality information to another radio communication apparatus, and a reception unit that receives first allocation information indicating frequency resource allocated by the other radio communication apparatus to the radio communication apparatus based on the first reception quality information, and second allocation information indicating a modulation scheme and a coding rate determined by the other radio communication apparatus based on the second reception quality information with respect to the radio communication apparatus.

FIG. 3

## Description

CROSS-REFERENCE TO RELATED APPLICATIONS

This application is based upon and claims the benefit of priority of the prior Japanese Patent Application No. 2008-175509, filed on July 4, 2008, the entire contents of which are incorporated herein by reference.

FIELD

The present invention relates to a radio communication apparatus, system, and method, in which radio resources are used for communication.

BACKGROUND

A radio communication system such as OFDM (Orthogonal Frequency Division Multiplex) system carries out communication utilizing AMC (Adaptive Modulation and Coding) and scheduling.

With the AMC, a base station selects which modulation scheme to use and which coding rate to use, e.g., 1/2 or 1/3, based on the reception quality of a terminal varying over time. Modulation schemes include QPSK (Quadrature Phase Shift Keying), 16 QAM (Quadrature Amplitude Modulation), 64 QAM, and others.

Scheduling consists of the base station allocating the resources of frequency (and/or time) or the like to each terminal under its control.

For the base station to perform the AMC and scheduling as such, a terminal under control of the base station measures the reception quality, and forwards information about the resulting (radio) reception quality, for example, a CQI (Channel Quality Indicator) to the base station, e.g., HSDPA TS 25.214.

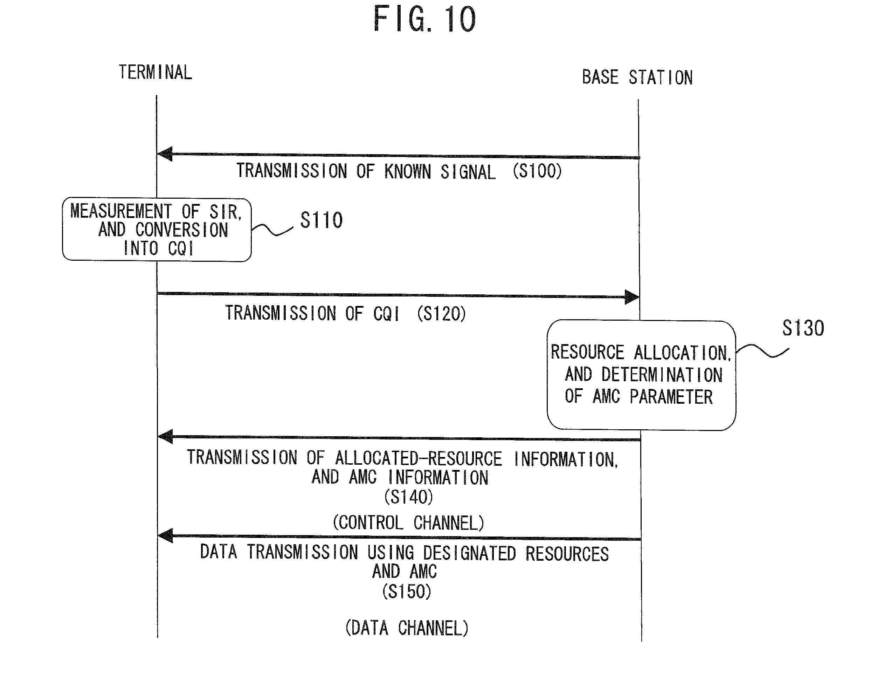

FIG. 10 is a diagram illustrating an example of a known process sequence. A base station forwards a known signal such as pilot signal to a terminal (S100). The terminal uses the known signal to measure the reception quality, e.g., SIR (Signal to Interference Ratio), and converts the measurement result into a CQI (S110). Based on the CQI provided by the terminal (S120), the base station determines an AMC parameter and the allocation of resources (frequency and others) (S130) for transmission to the terminal (S140 and S150).

For an OFDM system, for example, the frequency resources vary in reception quality. Due to such a variation, for the base station to make a selection of AMC parameters and perform scheduling with good accuracy, the terminal measures the reception quality of every frequency possible for use, and provides the base station with the resulting CQI(s). This, however, consumes the radio resources of an uplink.

In consideration thereof, there is a technology of transmitting, by a terminal, only a CQI of frequency resources determined as having the satisfactory reception quality among the measurement results (3GPP TS 36.213).

The problem here is that, even if the terminal provides the base station with the CQI of the frequency resources having a good quality, when the frequency resources are already in use in another terminal, the base station is not allowed to allocate the frequency resources to the terminal, and has no way of determining an AMC parameter. Thus, the radio resources of the uplink are wasted by the amount used by the terminal for transmission of the CQI.

SUMMARY

In one aspect of the embodiment, an object of the invention is to provide a radio communication apparatus, system, and method with which radio resources are utilized effectively.

According to an aspect of the invention, a radio communication apparatus includes a generation unit that generates first and second reception quality information; a transmission unit that transmits the first and second reception quality information to another radio communication apparatus; and a reception unit that receives first allocation information indicating a frequency resource allocated by the other radio communication apparatus to the radio communication apparatus based on the first reception quality information, and second allocation information indicating a modulation scheme and a coding rate determined by the other radio communication apparatus based on the second reception quality information with respect to the radio communication apparatus.

According to an aspect of the invention, a radio communication apparatus includes a reception unit that receives the first and second reception quality information from another radio communication apparatus; a scheduling unit that allocates a frequency resource to the another radio communication apparatus based on the first reception quality information, and determines a modulation scheme and a coding rate based on the second reception quality information with respect to the another radio communication apparatus; and a transmission unit that transmits, to the another radio communication apparatus, first information of the allocated frequency resource, and second information of the determined modulation scheme and coding rate.

According to an aspect of the invention, a radio communication system performs radio communication between first and second radio communication apparatuses. The radio communication system includes the first radio communication apparatus including a generation unit that generates first and second reception quality information, and a transmission unit that transmits the first and second reception quality information to the second radio communication apparatus; and the second radio communication apparatus including a reception unit that receives the first and second reception quality information, a scheduling unit that allocates a frequency resource to the first radio communication apparatus based on the first reception quality information, and determines a modulation scheme and a coding rate with respect to the first radio communication apparatus based on the second reception quality information, and a transmission unit that transmits, to the another radio communication apparatus, the allocated frequency resource, and the determined modulation scheme and coding rate.

According to an aspect of the invention, a radio communication method includes generating first and second reception quality information; transmitting the first and second reception quality information to another radio communication apparatus; and receiving first information of a frequency resource allocated by the another radio communication apparatus to the radio communication apparatus based on the first reception quality information, and second information of a modulation scheme and a coding rate determined based on the second reception quality information with respect to the radio communication apparatus.

According to an aspect of the invention, a radio communication method includes receiving first and second reception quality information from another radio communication apparatus; allocating a frequency resource to the another radio communication apparatus based on the first reception quality information to determine a modulation scheme and a coding rate based on the second reception quality information with respect to the another radio communication apparatus; and transmitting, to the another radio communication apparatus, first information of the allocated frequency resource, and second information of the determined modulation scheme and coding rate.

According to an aspect of the invention, a radio communication method in a radio communication system, which performs radio communication between first and second radio communication apparatuses, includes the first radio communication apparatus generating first and second reception quality information, and transmitting the first and second reception quality information to the second radio communication apparatus; and the second radio communication apparatus receiving the first and second reception quality information, allocating a frequency resource to the first radio communication apparatus based on the first reception quality information, determining a modulation scheme and a coding rate with respect to the first radio communication apparatus based on the second reception quality information, and transmitting, to the another radio communication apparatus, first information of the allocated frequency resource, and second information of the determined modulation scheme and coding rate.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF THE DRAWINGS

FIG. 1 is an example of a configuration of a terminal device;
FIG. 2 is an example of a configuration of a base station device;
FIG. 3 is an example of a process sequence to transmit and receive a CQI;
FIG. 4 is an example of a terminal located at a cell edge;
FIGS. 5A and 5B are each an example of a frequency allocation of a known signal;
FIG. 6 is a flowchart of an example of a process to be executed to a CQI for resource allocation use;
FIG. 7 is an example of a case in which the resource-allocation-use CQI is transmitted at regular intervals;
FIG. 8 is an example of a sequence with which a CQI is transmitted and received;
FIG. 9 is an example of another sequence with which a CQI is transmitted and received; and
FIG. 10 is an example of a previous process sequence with which a CQI is transmitted and received.

DESCRIPTION OF THE PREFERRED EMBODIMENTS

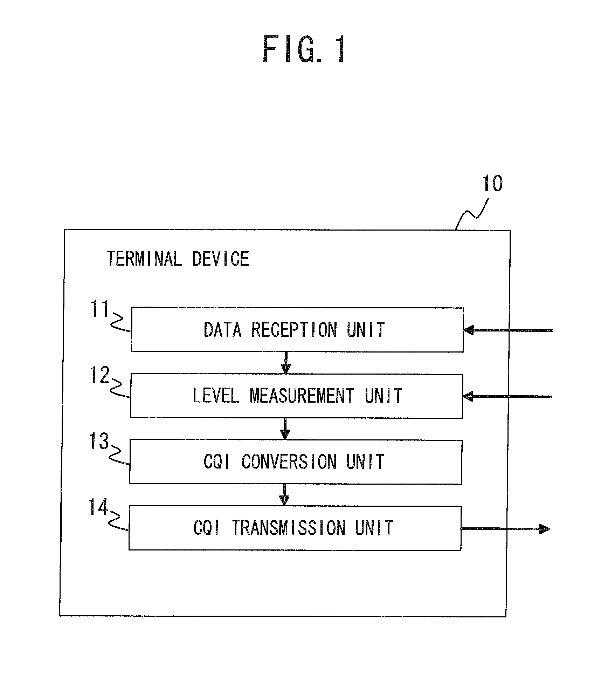

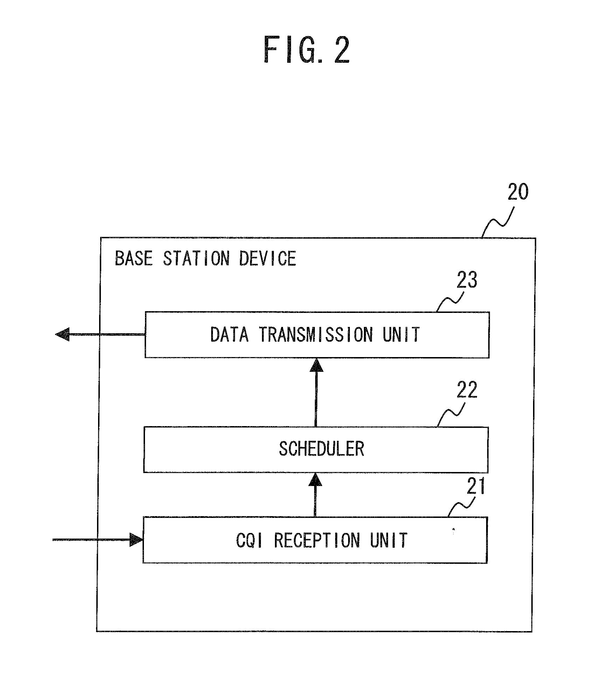

Embodiments for carrying out the invention are described below in detail by referring to the accompanying drawings.
First Embodiment
A first embodiment will be described. FIG. 1 is an example of a configuration of a terminal device 10 (hereinafter, "terminal"), and FIG. 2 is an example of a configuration of a base station device 20 (hereinafter, "base station").
The terminal 10 is configured to include a data reception unit 11 (data receiver), a level measurement unit 12, a CQI conversion unit 13, and a CQI transmission unit (transmitter) 14.
The data reception unit 11 receives data, control channels, and the like provided by the base station 20.
The level measurement unit 12 receives a known signal such as a pilot signal or a preamble signal coming from the base station 20, and based on such a known signal, measures the radio reception quality, e.g., the SIR. The reception quality may also include SINR (Signal to Interference and Noise Ratio), CIR (Carrier to Interference Ratio), and others. The level measurement unit 12 also measures the reception quality of every frequency available for use by the terminal 10.
The CQI conversion unit 13 converts the reception quality provided by the level measurement unit 12 into a CQI (quality information indicator). In this embodiment, there are two types of CQIs, the details will be described later.
The CQI transmission unit 14 transmits the CQI converted by the CQI conversion unit 13 to the base station 20.

The base station 20 is configured to include a CQI reception unit (receiver) 21, a scheduler 22, and a data transmission unit (transmitter) 23.

The CQI reception unit 21 receives the CQI provided by the terminal 10, and outputs the CQI to the scheduler 22.

The scheduler 22 allocates the frequency resources to the terminal 10, i.e., performs scheduling, based on the CQI, and determines which modulation scheme to use, e.g., QPSK, 16 QAM, or 64 QAM, and which coding scheme to use with respect to the terminal 10, i.e., performs the AMC.

The data transmission unit 23 forwards, to the terminal 10, information about the frequency resources, and information about the modulation and coding schemes (AMC parameter information) determined by the scheduler 22. The data transmission unit 23 may forward such information as a control channel, for example. The data transmission unit 23 also forwards a known signal.

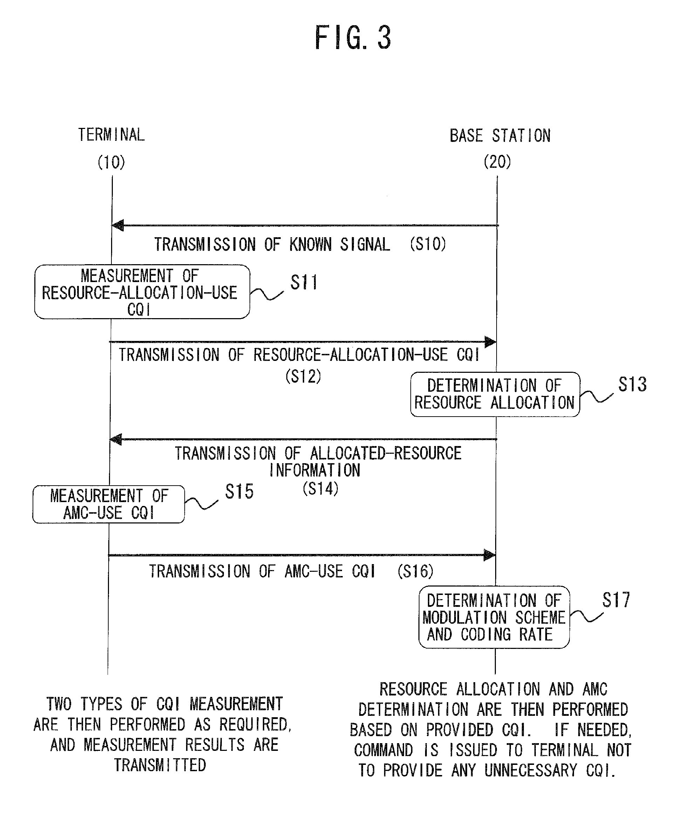

Operations in the first embodiment will be described next. FIG. 3 is an example of a sequence about transmission and reception of a CQI. First of all, the data transmission unit 23 in the base station 20 transmits a known signal to the terminal 10 (S10).

In the terminal 10, the level measurement unit 12 receives the known signal, measures the reception quality based on the known signal, and measures also the reception quality of every frequency available for use by the terminal 10 or a predetermined frequency range (R1). The CQI conversion unit 13 then converts the reception quality being the measurement result into a CQI for resource allocation use (S11).

The resource-allocation-use CQI is used for the determination (allocation) of which frequency resources are to be used in the base station 20. For allocation of the frequency resources to the terminal 10, the scheduler 22 in the base station 20 determines which frequencies improve the reception quality of the terminal 10. That is, for allocation of the frequency resources, the scheduler 22 determines whether or not to allocate the frequency resources to each of the frequencies available for use by the terminal 10 based on the resource-allocation-use CQI. Thus the resource-allocation-use CQI may be used for allocation of radio resources without being used for AMC control. The accuracy of the resource-allocation-use CQI may be lower than the CQI for AMC.

For example, the resource-allocation-use CQI may express in binary (1-bit) notation whether the frequency resource is of "high quality" or of "low quality" for each of the frequencies available for use by the terminal 10. In this case, the level measurement unit 12 measures the reception quality of each of the frequencies available for use. The CQI conversion unit 13 then performs conversion of the reception quality into the resource-allocation-use CQI after sorting the measurement results of reception quality into a descending order, e.g., the upper half of the sorting result is "high quality", and the remaining half is "low quality".

The CQI transmission unit 14 then forwards the resource-allocation-use CQI to the base station 20 (S12).

Thereafter, in the base station 20, the CQI reception unit 21 receives the resource-allocation-use CQI, and uses the CQI as a basis to determine (allocate) the frequency resources of the terminal 10. That is, based on the resource-allocation-use CQI, the scheduler 22 selects frequencies indicating "high quality" from the frequencies available for use by the terminal 10 for allocation as the frequency resources of the terminal 10. The number of the frequency resources to be allocated by the scheduler 22 may be one or more.

Herein, when the CQI reception unit 21 receives the resource-allocation-use CQI from each of a plurality of terminals, it is preferable for the scheduler 22 to allocate, to each of the terminals, the frequency resources indicated as "high quality" by the resource-allocation-use CQI. Especially, the scheduler 22 preferably allocates, with priority given to a terminal 10 located at the cell edge, the frequency resources indicated as "high quality" by the CQI for maintaining the communication line with the terminal 10.

The data transmission unit 23 forwards the frequency resources allocated by the scheduler 22 to the terminal 10 as allocated-resource information (S14), wherein a band range (R2) of the frequency resources allocated to the terminal 10 may be narrower than the predetermined frequency range R1.

Upon reception of the allocated-resource information, the data reception unit 11 in the terminal 10 outputs a command to the level measurement unit 12, and the level measurement unit 12 measures the reception quality of the frequencies found in the allocated-resource information. The CQI conversion unit 13 then converts the reception quality into a CQI (hereinafter, "AMC-use CQI") (S15).

This AMC-use CQI is used by the scheduler 22 in the base station 20 for determining the modulation scheme and the coding rate. In an embodiment, the scheduler may be prohibited to use AMC-use CQI for radio resource allocation regarding frequency. For selecting the modulation scheme and the coding rate matching well the characteristics of the communication link between the terminal 10 and the base station 20, the AMC-use CQI preferably has a higher accuracy than the resource-allocation-use CQI, e.g., IdB. Note that the level measurement unit 12 is required only to measure the CQI of any designated frequency. The AMC-use CQI is a result of converting the reception quality of the frequencies found in the information about the frequency resources, e.g., SIR, into a predetermined number of bits, e.g., 5 to 10 bits.

The CQI transmission unit 14 then forwards the AMC-use CQI to the base station 20 (S16).

The scheduler 22 in the base station 20 then uses the AMC-use CQI to determine which modulation scheme and which coding rate to use (S17).

The base station 20 then forwards the information (AMC parameter) about the determination results, i.e., the modulation scheme and the coding rate, as a control channel. The base station 20 also performs data transmission to the terminal 10 using the determined modulation scheme and others. The terminal 10 extracts the AMC parameter from the control channel, and performs data transmission and reception with the base station 20 by the determined modulation scheme.

Alternatively, after making a determination about the allocation of the frequency resources and which modulation scheme to use (S13 and S17), for example, the terminal 10 may transmit the resource-allocation-use CQI again after a lapse of a predetermined length of time (S12 and S16), and may perform the allocation of the frequency resources (S13 and S17). Herein, the base station 20 may issue a command, if desired, to the terminal 10 not to transmit any unnecessary CQI.

As such, in the first embodiment, the terminal 10 separately transmits two types of CQIs: the resource-allocation-use CQI, and the AMC-use CQI.

The AMC-use CQI is the CQI concerning the frequency allocated in the base station. Accordingly, compared to the case of transmitting a CQI for every frequency available for use by the terminal 10, the amount of transmission thereof becomes less. This means that the amount of radio resources of the uplink that becomes available for use is an amount equivalent to the amount the transmission is reduced, thereby enabling the effective use of the resources.

On the other hand, while the resource-allocation-use CQI is a CQI for every frequency available for use, the CQI value is a binary value. This means that the entire amount of transmission thereof becomes less compared to the case of transmitting the reception quality itself such as the SIR. Accordingly, the amount of the radio resources of the uplink that becomes available for use is an amount equivalent to the amount the transmission is reduced, thereby enabling the effective use of the resources.

Second Embodiment

A second embodiment will be described next. The second embodiment is an example applied to the terminal 10 located at the cell edge.

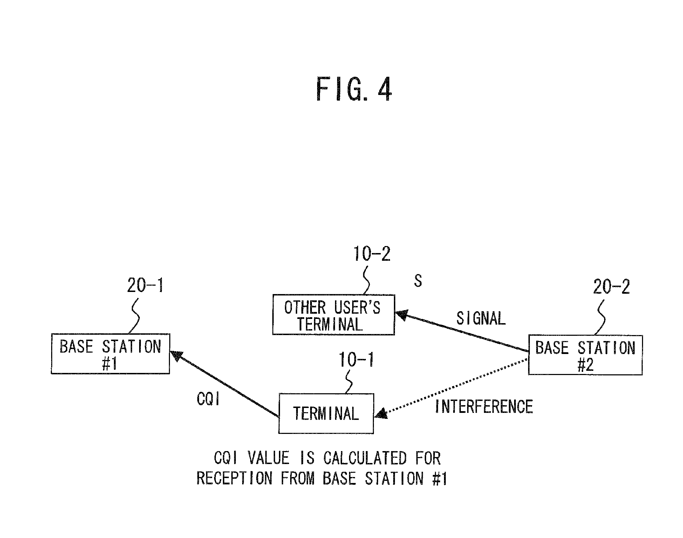

FIG. 4 is an example of the relationship among terminals 10-1 and 10-2 and a plurality of base stations 20-1 and 20-2. The terminal 10-1 is located at the cell edge of the base station (#1) 20-1 with which a connection is being established. At this time, for the terminal 10-1, a signal coming from the adjacent base station (#2) 20-2 sometimes causes interference. If this is the case, when the terminal 10-1 measures the reception quality, e.g., the SIR, of any known signal, the resulting value becomes lower than the reception quality with no interference.

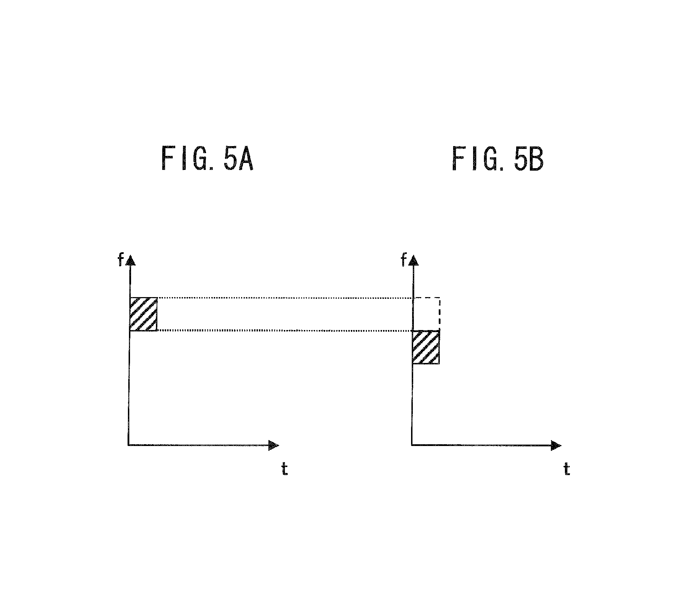

FIGS. 5A and 5B are each a diagram describing to which frequency the known signal is allocated. As illustrated in the drawings, the base station 20-1 being connected to the terminal 10-1 uses frequencies different from the frequencies of the base station 20-2 for transmission of the known signal.In this case, when the base station 20-2 allocates the frequency, which is used to transmit the known signal, to the other terminal 10-2, the SIR measured by the terminal 10-1 is degraded due to interference caused by the base station 20-2 allocating frequency resources. On the other hand, when the frequency to be used to transmit the known signal is not allocated by the base station 20-2, the resulting SIR, which is the measurement result by the terminal 10-1, will be high in value. In the second embodiment, such a variation of the SIR value may be used as an index to determine whether the resource-allocation-use CQI is "high quality" or "low quality". In other words, the base station 20-1 uses the resource-allocation-use CQI to determine whether or not the frequency is one already allocated by the adjacent base station 20-2.

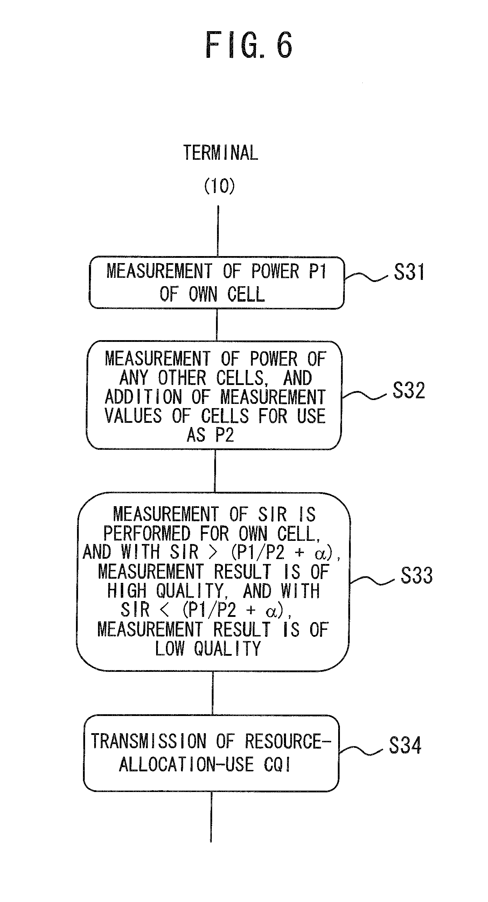

FIG. 6 is an example of a process of the resource-allocation-use CQI. This process may be executed in the S11 of the first embodiment.

First of all, the level measurement unit 12 measures an electric power P1 of a known signal coming from the base station (cell) 20-1 connected to the terminal 10-1.

The level measurement unit 12 then measures an electric power P2 of a known signal coming from the base station 20-2. When there is a plurality of base stations 20-2 in a close range, the level measurement unit 12 measures the electric power of every known signal , and finds the total value. Herein, the level measurement unit 12 maintains the frequency of the known signal from the base station 20-1 and that from the base station 20-2, and based on the frequencies, receives the known signals for measurement of the electric power P1 and P2.

The CQI conversion unit 13 then calculates the SIR of the base station 20-1, and when SIR > (P1/P2 + $\alpha$) (where $\alpha$ is a positive constant) is established, determines that the resource-allocation-use CQI is "high quality", and when SIR < (P1/P2 + $\alpha$) is established, determines that the resource-allocation-use CQI is "low quality". The determination result of "high quality" or "low quality" is used as the resource-allocation-use CQI.

When the frequency resources used to transmit the known signal from the base station 20-1 are allocated for the data transmission of the base station 20-2 in a close range, the SIR being the measurement result by the terminal 10-1 satisfies Expression (1).

$$SIR \approx P1/P2 \ldots(1)$$

The electric power P2 from the base station 20-2 near the terminal 10-1 will become the interference with respect to the electric power P1 from the base station 20-1, and thus the SIR being the measurement result by the terminal 10-1 satisfies Expression (1). With Expression (1) being satisfied, some interference is occurring, and thus the known signal has a low reception quality. Accordingly, as described above, when SIR < (P1/P2 + α) is established, the reception quality of the known signal is "low quality".

On the other hand, when the frequency resources to transmit the known signal from the base station 20-1 are not allocated by the base station 20-2 to the terminal 10-2, the SIR meets Expression (2).

$$SIR \approx \infty \ldots (2)$$

This is because the electric power P2 from the base station 20-2 takes a value close to "0". Accordingly, when SIR > (P1/P2 + α) is established, the reception quality of the known signal is "high quality".

The above example describes the frequency of a known signal, and is also the same with any other frequency. The terminal 10 measures the SIR of every frequency available for use, and executes the processes S31 to S33 for each of the resulting SIRs. Moreover, such an example is also the same for reception quality indicators other than the SIR, e.g., CIR.

The CQI transmission unit 14 then forwards the resource-allocation-use CQI (S34). Thereafter, the processes are similar to the processes in the first embodiment.

After receiving the resource-allocation-use CQI of "low quality" from the terminal 10, the base station 20 determines that the resources of the frequency are already in use by the base station 20-2, and thus performs scheduling to allocate, to the terminal 10-1, the frequency resources indicating "high quality" by the resource-allocation-use CQI to avoid interference (S13).

The base station 20 is also capable of changing the allocation to any other frequency resources of "high quality". In this case, the base station 20 notifies the terminal 10 of the frequency resources after such a change (S14), and the procedure goes to steps S31 to S34 for the terminal 10 to measure again the resource-allocation-use CQI, and to step of S15 for the terminal 10 to measure the AMC-use CQI using the frequency resources after the change.

Third Embodiment

A third embodiment will be described next. The third embodiment is also an example in which the terminal 10 is located at the cell edge.

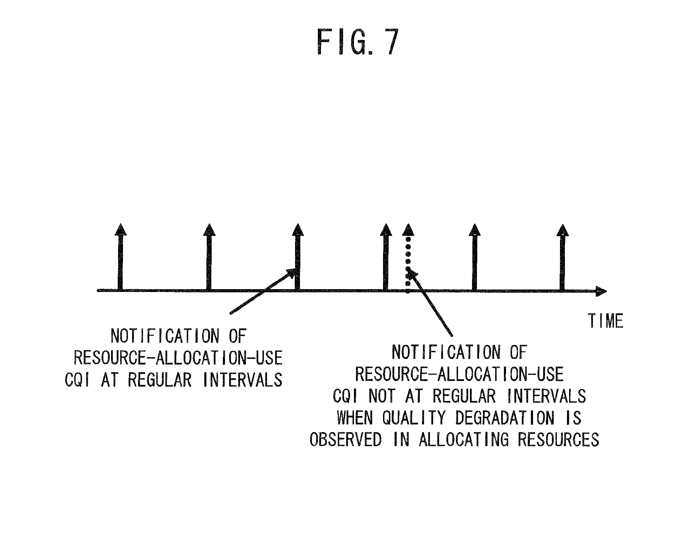

The terminal 10 preferably notifies the base station 20 of the resource-allocation-use CQI at regular intervals, e.g., every 50 ms. FIG. 7 is an example where a resource-allocation-use CQI is transmitted at regular intervals. In FIG. 7, the horizontal axis indicates the time, and the vertical axis indicates the electric power for transmission of the resource-allocation-use CQI.

In the first and second embodiments, the frequency resources once allocated by the base station 20 are assumed to be in use for a predetermined length of time. The concern here is that, as described in the second embodiment, when the SIR is used to estimate whether or not the base station 20-2 is allocated with the frequency resources for the purpose of avoiding any interference, the same frequency resources may happen to be allocated to the adjacent base station 20-2 at the same time. If this is the case, however, the frequency resources that cause interference are preferably not to be used at the same time in the base stations 20-1 and 20-2.

In consideration thereof, when the allocated frequency resources indicate a change from "high quality" to "low quality" except when the resource-allocation-use CQI coming at regular intervals notifies as such, the terminal 10 forwards the resource-allocation-use CQI at irregular intervals.

For example, when converting the reception quality of the known signal into the resource-allocation-use CQI (S11 of FIG. 3 and S33 of FIG. 6), if the resource-allocation-use CQI shows a change from "high quality" to "low quality", the CQI conversion unit 13 immediately issues a command to the CQI transmission unit 14 to transmit the resource-allocation-use CQI information indicating "low quality". As a result, when the frequency resources during allocation indicate quality degradation, the resource-allocation-use CQI is transmitted at irregular intervals (S12 and S34).

After the base station 20 receives such a resource-allocation-use CQI, the scheduler 22 therein performs allocation of other frequency resources (S13), and makes a notification to the terminal 10 (S14).

Fourth Embodiment

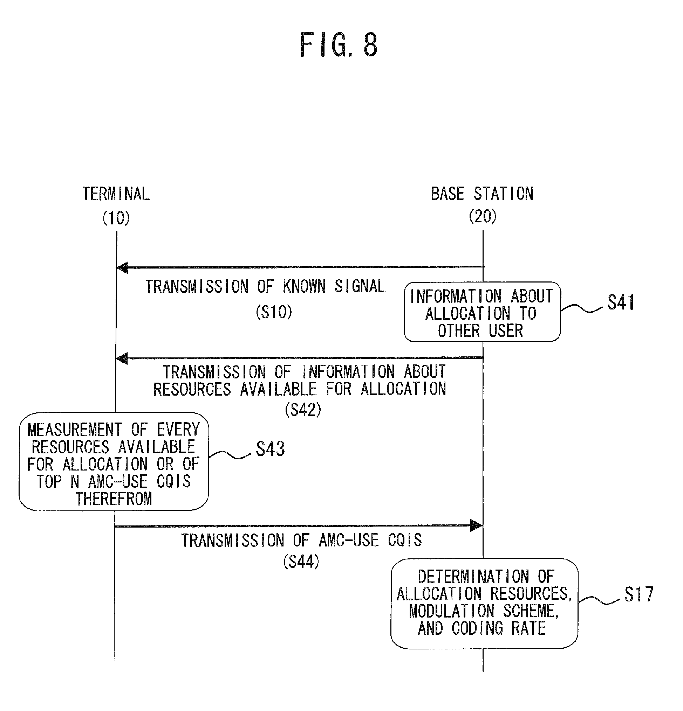

Described next is a fourth embodiment. The fourth embodiment is an example in which the radio resources of the uplink are in use, and thus the CQI cannot be transmitted. FIG. 8 is an example of a sequence in the fourth embodiment.

The base station 20 forwards a known signal (S10). The scheduler 22 in the base station 20 then targets the frequency resources not including those already allocated to any other terminals to find frequency resources available for use by the terminal 10 (S41). For example, when the scheduler 22 is not provided with the resource-allocation-use CQI even after the lapse of a predetermined length of time due to congestion of the uplink (or when the terminal 10 cannot transmit the resource-allocation-use CQI), this process will be executed. Herein, the number of the frequency resources may be one or more.

The data transmission unit 23 then forwards information about the frequency resources available for allocation (S42).

The level measurement unit 12 in the terminal 10 then measures the reception quality of the frequency resources available for allocation, and the CQI conversion unit 13 converts, into AMC-use CQI, reception quality regarding the frequency resources or the top N (where "IV" is a positive integer) pieces of the reception quality values respectively(S43). As in the first embodiment, the AMC-use CQI may be of a value that is a result of converting the reception quality, e.g., the SIR, into a predetermined number of bits.

The CQI transmission unit 14 then forwards the AMC-CQI to the base station 20 (S44).

Based on the AMC-use CQI, the scheduler 22 then performs allocation of the frequency resources, and determines which modulation scheme and which coding rate to use (S17). Thereafter, the procedure is the same as that in the first embodiment.

In the fourth embodiment, the frequency-resource-allocation-use CQI is not transmitted from the terminal 10 to the base station 20, thereby allowing effective use of the radio resources of the uplink.

Fifth Embodiment

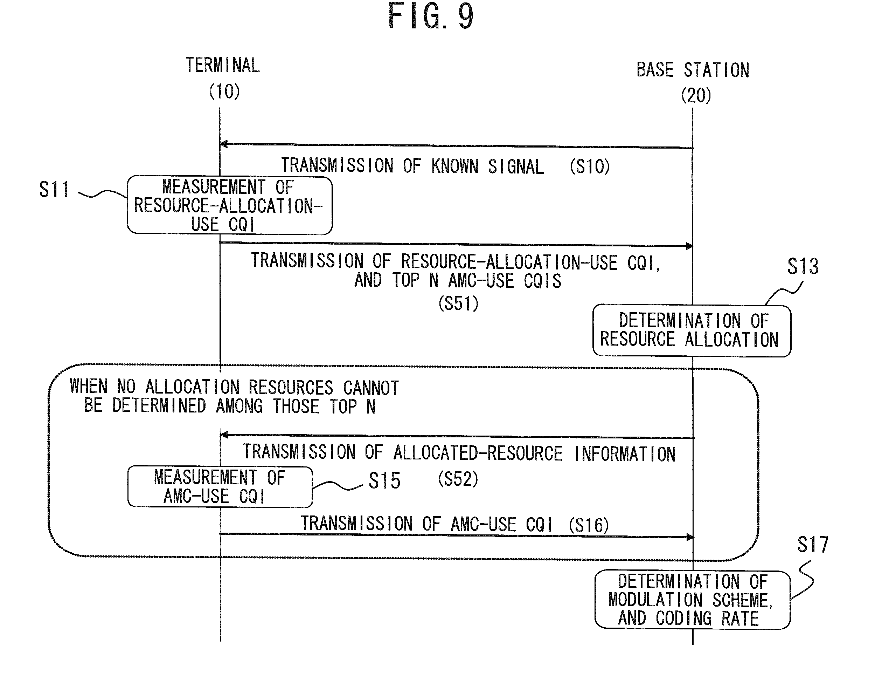

Described next is a fifth embodiment. FIG. 9 is an example sequence in the fifth embodiment.

The base station 20 forwards a known signal (S10).

The terminal 10 then measures the reception quality of every frequency available for use by the terminal 10, thereby finding the resource-allocation-use CQI (S11). At this time, the terminal 10 measures the AMC-use CQI of the top N (where "N" is a positive integer) pieces of the reception quality values, and forwards the measurement results to the base station 20 together with the resource-allocation-use CQI (S51).

Based on the resource-allocation-use CQI, the scheduler 22 in the base station 20 allocates the frequency resources to the terminal 10 (S13).

In this case, when the allocated frequency resources in the top N pieces of the frequency resources provided by the terminal 10 are included, the scheduler 22 determines which modulation scheme and which coding rate to use based on the AMC-use CQI of the allocated frequency resources (S17).

On the other hand, when the allocated frequency resources in the top N pieces of the frequency resources provided by the terminal 10, e.g., when the top N pieces of the frequency resources are already allocated to another terminal, are not included, the scheduler 22 allocates the frequency resources among the frequency resources sent as resource-allocation-use CQIs and as frequency resources other than the top N pieces. The data transmission unit 23 then forwards the information to the terminal 10 (S52). The number of the frequency resources to be transmitted to the terminal 10 may be one or more.

The terminal 10 then measures the AMC-use CQI using the frequency resources provided as such (S15), and forwards the measurement result to the base station 20 (S16).

Using the AMC-use CQI provided as such, the base station 20 performs scheduling, e.g., determination of which modulation scheme to use (S17). Thereafter, as in the first embodiment, the base station 20 performs data transmission to the terminal 10 using the modulation scheme or others determined as such. The terminal 10 is provided with the AMC parameter from the control channel, and based on the parameter, performs data transmission and reception.

Herein, the transmission of the allocated-resource information (S52) and the transmission of the AMC-use CQI are not necessarily performed, and thus the radio resources can be utilized with good effectiveness.

Other embodiments

In the first to fifth embodiments above, the level measurement unit 12 in the terminal 10 measures the reception quality of each of the two CQIs (S11 and S15). Alternatively, the level measurement unit 12 may perform such a measurement only once, and then the CQI conversion unit 13 may perform conversion into the resource-allocation-use CQI (S11) and conversion into the AMC-use CQI (S15). The level measurement unit 12 may maintain the measured reception quality result, and may read out the reception quality during the respective processes (S11 and S15).

Also in the first to fifth embodiments, the determination of which modulation scheme and which coding rate to use (S17) may be performed in the terminal 10. In this case, the AMC-use CQI is not transmitted, allowing effective use of the radio resources.

According to the embodiments described above, provided is a radio communication apparatus, system, and method with which the radio resources may be used effectively.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

**Claims**

1. A radio communication apparatus, comprising:

   a generation unit that generates first and second reception quality information;
   a transmission unit that transmits the first and second reception quality information to another radio communication apparatus; and
   a reception unit that receives first allocation information indicating a frequency resource allocated by the another radio communication apparatus to the radio communication apparatus based on the first reception quality information, and

second allocation information indicating a modulation scheme and a coding rate determined by the another radio communication apparatus based on the second reception quality information with respect to the radio communication apparatus.

2. The radio communication apparatus according to claim 1, wherein the generation unit generates the second reception quality information based on the first allocation information.

3. The radio communication apparatus according to claim 1 or 2, wherein the first reception quality information is an estimation result about whether or not the frequency resource is already allocated by a radio communication apparatus located near the another radio communication apparatus.

4. The radio communication apparatus according to claim 1, 2 or 3, wherein, when the first reception quality information is changed to indicate that the frequency resource allocated to the radio communication apparatus is degraded in reception quality, the transmission unit transmits the first reception quality information.

5. The radio communication apparatus according to claim 1, 2, 3 or 4, wherein the generation unit generates reception quality information for adaptive modulation and coding based on the frequency resource allocated by the radio communication apparatus without using the first allocation information.

6. The radio communication apparatus according to any of claims 1 to 5, wherein the transmission unit transmits the first reception quality information and top N pieces of the second reception quality information, and when frequency resources other than the top N pieces of the first frequency resources are provided, the generation unit generates the second reception quality information based on the third frequency resources.

7. The radio communication apparatus according to any of claims 1 to 6, wherein the second reception quality information contains more information than the first reception quality information.

8. The radio communication apparatus according to any of claims 1 to 7, wherein the transmission unit transmits the first reception quality information at regular intervals.

9. The radio communication apparatus according to any of claims 1 to 8, wherein the first reception quality information is written in binary notation and indicates whether every frequency available for the radio communications apparatus to receive is of a high quality or not.

10. The radio communication apparatus according to any of claims 1 to 9, wherein the second reception quality information is information about a reception quality with respect to the allocated frequency resource.

11. A radio communication apparatus, comprising:

a reception unit that receives first and second reception quality information from another radio communication apparatus;
a scheduling unit that allocates a frequency resource to the another radio communication apparatus based on the first reception quality information, and
determines a modulation scheme and a coding rate based on the second reception quality information with respect to the another radio communication apparatus; and
a transmission unit that transmits, to the another radio communication apparatus, first information of the allocated frequency resource, and second information of the determined modulation scheme and coding rate.

12. The radio communication apparatus according to claim 11, wherein
the scheduling unit allocates, to the another radio communication apparatus, a specific frequency resource other than the frequency resources allocated to a radio communication apparatus other than the another radio communication apparatus, the transmission unit transmits the specific frequency resource to the another radio communication apparatus, and
the reception unit receives the second reception quality information generated by the another radio communication apparatus based on the specific frequency resource.

13. The radio communication apparatus according to claim 11 or 12, wherein
the reception unit receives the first reception quality information and top N pieces of the second reception quality information,
when the other radio communication apparatus cannot be allocated with any of the top N pieces of the first frequency resource, the scheduling unit allocates, to the another radio communication apparatus, certain frequency resources other than the top N pieces of the certain frequency resources, and

the transmission unit transmits the certain frequency resources to the another radio communication apparatus.

**14.** A radio communication system that performs radio communication between first and second radio communication apparatuses, the radio communication system comprising:

the first radio communication apparatus including:

a generation unit that generates first and second reception quality information, and
a transmission unit that transmits the first and second reception quality information to the second radio communication apparatus; and

the second radio communication apparatus including:

a reception unit that receives the first and second reception quality information,
a scheduling unit that allocates a frequency resource to the first radio communication apparatus based on the first reception quality information, and determines a modulation scheme and a coding rate with respect to the first radio communication apparatus based on the second reception quality information, and
a transmission unit that transmits, to the another radio communication apparatus, the allocated frequency resource, and the determined modulation scheme and coding rate.

**15.** A radio communication method, comprising:

generating first and second reception quality information;
transmitting the first and second reception quality information to another radio communication apparatus; and
receiving first information of a frequency resource allocated by the another radio communication apparatus to the radio communication apparatus based on the first reception quality information, and second information of a modulation scheme and
a coding rate determined based on the second reception quality information with respect to the radio communication apparatus.

**16.** A radio communication method, comprising:

receiving first and second reception quality information from another radio communication apparatus;
allocating a frequency resource to the another radio communication apparatus based on the first reception quality information to determine a modulation scheme and a coding rate based on the second reception quality information with respect to the another radio communication apparatus; and
transmitting, to the another radio communication apparatus, first information of the allocated frequency resource, and second information of the determined modulation scheme and coding rate.

**17.** A radio communication method in a radio communication system that performs radio communication between first and second radio communication apparatuses, the radio communication method comprising:

the first radio communication apparatus generating first and second reception quality information, and transmitting the first and second reception quality information to the second radio communication apparatus, and
the second radio communication apparatus receiving the first and second reception quality information, allocating a frequency resource to the first radio communication apparatus based on the first reception quality information, determining a modulation scheme and a coding rate with respect to the first radio communication apparatus based on the second reception quality information, and
transmitting, to the another radio communication apparatus, first information of the allocated frequency resource, and second information of the determined modulation scheme and coding rate.

# FIG. 1

10

TERMINAL DEVICE

11
DATA RECEPTION UNIT

12
LEVEL MEASUREMENT UNIT

13
CQI CONVERSION UNIT

14
CQI TRANSMISSION UNIT

# FIG. 2

BASE STATION DEVICE — 20

DATA TRANSMISSION UNIT — 23

SCHEDULER — 22

CQI RECEPTION UNIT — 21

# FIG. 3

TERMINAL
(10)

BASE STATION
(20)

TRANSMISSION OF KNOWN SIGNAL (S10)

MEASUREMENT OF RESOURCE-ALLOCATION-USE CQI — S11

TRANSMISSION OF RESOURCE-ALLOCATION-USE CQI (S12)

DETERMINATION OF RESOURCE ALLOCATION — S13

TRANSMISSION OF ALLOCATED-RESOURCE INFORMATION (S14)

MEASUREMENT OF AMC-USE CQI — S15

TRANSMISSION OF AMC-USE CQI (S16)

DETERMINATION OF MODULATION SCHEME AND CODING RATE — S17

TWO TYPES OF CQI MEASUREMENT ARE THEN PERFORMED AS REQUIRED, AND MEASUREMENT RESULTS ARE TRANSMITTED

RESOURCE ALLOCATION AND AMC DETERMINATION ARE THEN PERFORMED BASED ON PROVIDED CQI. IF NEEDED, COMMAND IS ISSUED TO TERMINAL NOT TO PROVIDE ANY UNNECESSARY CQI.

# FIG. 4

CQI VALUE IS CALCULATED FOR
RECEPTION FROM BASE STATION #1

FIG. 5A                    FIG. 5B

# FIG. 6

TERMINAL

(10)

MEASUREMENT OF POWER P1 OF OWN CELL — S31

MEASUREMENT OF POWER OF ANY OTHER CELLS, AND ADDITION OF MEASUREMENT VALUES OF CELLS FOR USE AS P2 — S32

MEASUREMENT OF SIR IS PERFORMED FOR OWN CELL, AND WITH SIR > (P1/P2 + $\alpha$), MEASUREMENT RESULT IS OF HIGH QUALITY, AND WITH SIR < (P1/P2 + $\alpha$), MEASUREMENT RESULT IS OF LOW QUALITY — S33

TRANSMISSION OF RESOURCE-ALLOCATION-USE CQI — S34

# FIG. 7

NOTIFICATION OF
RESOURCE-ALLOCATION-USE
CQI AT REGULAR INTERVALS

NOTIFICATION OF
RESOURCE-ALLOCATION-USE
CQI NOT AT REGULAR INTERVALS
WHEN QUALITY DEGRADATION IS
OBSERVED IN ALLOCATING RESOURCES

TIME

# FIG. 8

TERMINAL
(10)

BASE STATION
(20)

TRANSMISSION OF KNOWN SIGNAL
(S10)

INFORMATION ABOUT
ALLOCATION TO
OTHER USER
S41

TRANSMISSION OF INFORMATION ABOUT
RESOURCES AVAILABLE FOR ALLOCATION
(S42)

MEASUREMENT OF EVERY
RESOURCES AVAILABLE
FOR ALLOCATION OR OF
TOP N AMC-USE CQIS
THEREFROM
S43

TRANSMISSION OF AMC-USE CQIS
(S44)

DETERMINATION OF
ALLOCATION RESOURCES,
MODULATION SCHEME,
AND CODING RATE
S17

# FIG. 9

TERMINAL
(10)

BASE STATION
(20)

TRANSMISSION OF KNOWN SIGNAL    (S10)

S11 — MEASUREMENT OF RESOURCE-ALLOCATION-USE CQI

TRANSMISSION OF RESOURCE-ALLOCATION-USE CQI, AND TOP N AMC-USE CQIS
(S51)

S13 — DETERMINATION OF RESOURCE ALLOCATION

WHEN NO ALLOCATION RESOURCES CANNOT BE DETERMINED AMONG THOSE TOP N

TRANSMISSION OF ALLOCATED-RESOURCE INFORMATION

MEASUREMENT OF AMC-USE CQI    S15    (S52)

TRANSMISSION OF AMC-USE CQI  (S16)

S17 — DETERMINATION OF MODULATION SCHEME, AND CODING RATE

EP 2 141 853 A2

# FIG. 10

TERMINAL                                                      BASE STATION

$\longleftarrow$ TRANSMISSION OF KNOWN SIGNAL  (S100)

MEASUREMENT OF SIR,
AND CONVERSION
INTO CQI  — S110

TRANSMISSION OF CQI  (S120) $\longrightarrow$

S130
RESOURCE ALLOCATION,
AND DETERMINATION
OF AMC PARAMETER

$\longleftarrow$ TRANSMISSION OF ALLOCATED-RESOURCE INFORMATION,
AND AMC INFORMATION
(S140)
(CONTROL CHANNEL)

$\longleftarrow$ DATA TRANSMISSION USING DESIGNATED RESOURCES
AND AMC
(S150)

(DATA CHANNEL)

EP 2 141 853 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008175509 A